# EUROPÄISCHE PATENTSCHRIFT

(11) **EP 1 239 114 B1**
(45) Veröffentlichungstag und Bekanntmachung des Hinweises auf die Patenterteilung: **23.06.2004**
(21) Anmeldenummer: 02405141.9
(22) Anmeldetag: 27.02.2002
(51) Int. Cl.: E21D 21/00, E21D 20/02, F16B 13/00

(54) **Unterlegscheibe für Injektionsmörtel-Anker**
Washer for injected grout anchor
Rondelle pour ancrage par ciment injecté

(30) Priorität: 09.03.2001 DE 10111470
(43) Veröffentlichungstag der Anmeldung: 11.09.2002
(73) Patentinhaber: HILTI Aktiengesellschaft, 9494 Schaan (LI)
(72) Erfinder: Ludwig, Wolfgang, 86830 Schwabmünchen (DE); Leibhard, Erich, 81476 München (DE)
(74) Vertreter: Wildi, Roland

(56) Entgegenhaltungen:
- FR-A- 2 122 429
- US-A- 3 204 416
- US-A- 4 139 323

## Beschreibung

Die Erfindung betrifft eine Unterlegscheibe für eine, mittels einer Mörtelmasse in einem Bohrloch befestigbare, Ankerstange, mit einer Öffnung zur Durchführung der Ankerstange und einer Durchgangsbohrung zum Einfüllen der Mörtelmasse in das Bohrloch.

Bekannte Unterlegscheiben der oben genannten Art, finden beispielsweise bei einer Gebirgsverankerung Anwendung. In einen, mit einem Bohrloch versehenen, Untergrund wird ein stabförmiges Befestigungsmittel, beispielsweise eine Ankerstange, eingebracht. An dem setzrichtungsseitig abgewandten Ende des Befestigungsmittels wird die, mit einer Öffnung zur Aufnahme des Befestigungsmittels versehene, Unterlegscheibe aufgelegt. Mittels einer an der Unterlegscheibe angeordneten Durchgangsbohrung wird eine Verfüllmasse, insbesondere Mörtelmasse, in einen, durch die Wandung des Bohrlochs und die Aussenkontur des Befestigungsmittels gebildeten, Zwischenraum gebracht. Die, beispielsweise in Kartuschen enthaltene, Verfüllmasse kann mit Hilfe eines Kartuschenauspressgeräts in das Bohrloch verfüllt werden. Dadurch, dass die Unterlegscheibe auf einer Oberfläche des Untergrundes aufliegt, dichtet diese die Öffnung des Bohrlochs, zumindest teilweise, ab.

Aus der DE-A1-2102391 ist eine Unterlegscheibe mit einer Öffnung zur Durchführung einer Ankerstange und einer Durchgangsbohrung zum Einfüllen einer Mörtelmasse bekannt.

Vorteilhaft an der bekannten Lösung ist, dass durch die bekannte Unterlegscheibe ein einfaches Verfüllen der im Bohrloch eingesetzten Ankerstange ermöglicht wird.

Nachteilig an der bekannten Lösung ist, dass die Mörtelmasse bei einem kleinen Zwischenraum, zwischen der Ankerstange und der Wandung des Bohrlochs, die Durchgangsbohrung sehr nahe bei der Öffnung zur Aufnahme der Ankerstange angeordnet werden muss. Dadurch erhöht sich die Gefahr eines Bruches der Unterlegscheibe drastisch.

Der vorliegenden Erfindung liegt die Aufgabe zugrunde, eine Unterlegscheibe zu schaffen, welche sich auch für kleine, zu verfüllende Zwischenräume eignet. Ausserdem soll die Unterlegscheibe eine hohe Bruchfestigkeit gewährleisten.

Erfindungsgemäss wird die Aufgabe dadurch gelöst, dass die Öffnung und die Durchgangsbohrung durch zumindest einen Kanal miteinander verbunden sind, wobei der Verlauf des Kanals von der Flucht, zwischen der Durchgangsbohrung und der Öffnung abweicht.

Dadurch, dass die Öffnung zur Aufnahme der Ankerstange und die Durchgangsbohrung zum Einfüllen der Verfüllmasse, insbesondere Mörtelmasse, durch zumindest einen Kanal verbunden ist, wird die Verfüllmasse mittels des Kanals zum Zwischenraum transportiert. Dabei kann die Durchgangsbohrung beliebig auf der Unterlegscheibe angeordnet werden. Anstelle der Durchgangsbohrung könnte eine Sacklochbohrung angeordnet werden, die mit dem Kanal in Wirkverbindung steht. Der Kanal kann sowohl geschlossen als auch offen ausgebildet sein. Durch die Ausbildung des Kanals abweichend von der Flucht der Durchgangsbohrung und der Öffnung wird ein Bruch entlang des Kanals verhindert. Vorteilhaft ist eine nicht geradlinige Ausbildung des Kanals, um dessen Stabilität zu erhöhen.

Die Öffnung und die Durchgangsbohrung sind vorzugsweise durch zumindest zwei Kanäle miteinander verbunden, um eine grössere Schwächung der Unterlegscheibe im Bereich der Kanäle zu vermeiden. Ausserdem wird dadurch ein allfälliger Verschluss der Kanäle, beispielsweise durch die Ankerstange, verhindert.

In einer weiteren, besonders bevorzugten Ausführungsform, sind die Kanäle entlang der Scheibenebene bogenförmig, um eine Geometrie der Kanäle für eine optimale Bruchfestigkeit zu gewährleisten. Die bogenförmige Ausgestaltung der Kanäle verhindert ein Bruch entlang der Kanäle.

Vorteilhafterweise sind die Kanäle auf der dem Bohrloch zugewandten Seite der Unterlegscheibe angeordnet und zumindest teilweise zu dieser Seite hin offen ausgebildet. Dadurch ist eine wirtschaftliche Herstellung der Unterlegscheibe sichergestellt. Femer ist ein Verstopfen der Kanäle, sodass die Verfüllmasse nicht mehr durchgelassen wird, vor einem Setzvorgang nicht möglich. Einem Anwender der Unterlegscheibe ist es dadurch auf eine einfache Art und Weise möglich, die Funktionsfähigkeit der Kanäle zu überprüfen und eine allfällige Reinigung ohne grossen Aufwand vorzunehmen.

Um beim Einfüllen der Verfüllmasse mittels der Kanäle keinen übermässigen Widerstand zu generieren, entspricht die Summe der lichten Weite der Kanäle vorteilhafterweise etwa der lichten Weite der Durchgangsbohrung. Als besonders relevant ist der Innendurchmesser einer zur Anwendung gelangenden Einfüllvorrichtung anzusehen. Dadurch weisen die Kanäle insgesamt dieselbe Förderkapazität auf wie die Einfüllvorrichtung.

Vorzugsweise weist die dem Bohrloch gegenüberliegende Seite eine, zur Öffnung zentrisch angeordnete, konische Ausnehmung auf, um eine hohe Zuglast aufnehmen zu können. Eine zur Anwendung gelangende, auf die Ankerstange schraubbare, Mutter weist an dem, dem Bohrloch zugewandten Ende einen zur konischen Ausnehmung komplementär ausgebildeten Endbereich auf.

Zumindest die Kanäle werden vorteilhafterweise durch einen Prägevorgang hergestellt, um eine wirtschaftliche Herstellung der Unterlegscheibe sicherzustellen.

Die Erfindung wird nachstehend anhand eines Ausführungsbeispieles näher erläutert. Es zeigen:
- Fig. 1: eine perspektivische Darstellung einer Unterlegscheibe;
- Fig. 2: einen Querschnitt der in Fig. 1 dargestellten Unterlegscheibe;
- Fig. 3: eine Unteransicht der in Fig. 1 dargestellten Unterlegscheibe;
- Fig. 4: einen Querschnitt der in Fig.1 dargestellten Unterlegscheibe mit einem Gebirgsanker.

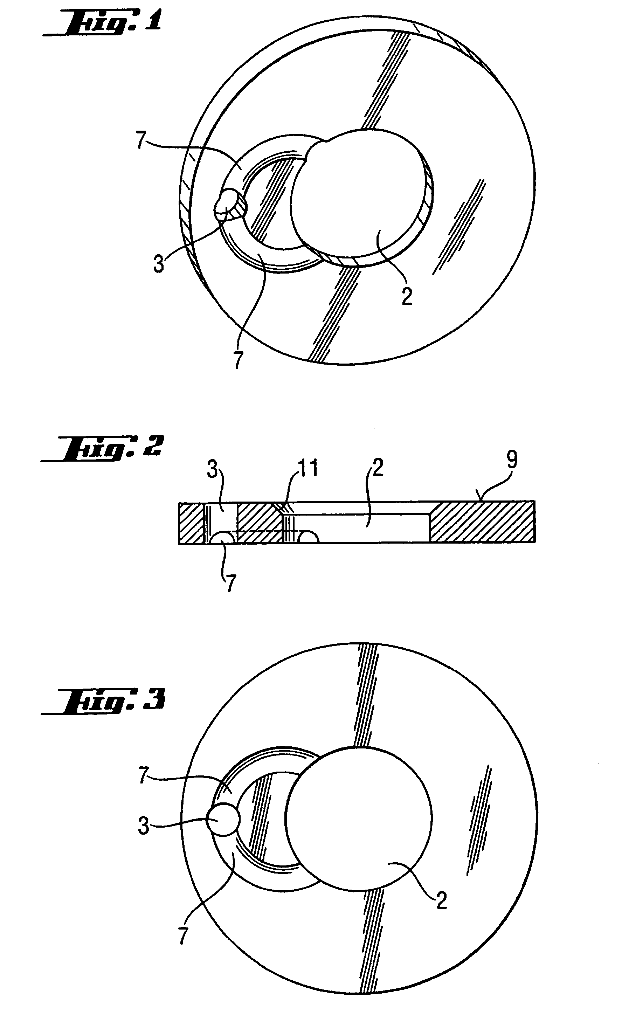

In den Fig. 1 bis 4 ist eine erfindungsgemässe Unterlegscheibe mit einer zentrisch angeordneten Öffnung 2 zur Aufnahme einer Ankerstange 1 und einer Durchgangsbohrung 3 zum Einfüllen einer Mörtelmasse 4 dargestellt. Die Ankerstange 1 ist teilweise in einem mit einem Bohrloch 5 versehenen Untergrund 6 befestigt.

Die im wesentlichen zylinderförmige Unterlegscheibe weist an der dem Bohrloch 5 zugewandten Seite zwei bogenförmige Kanäle 7 auf, welche die Öffnung 2 mit der Durchgangsbohrung 3 verbinden. Die Kanäle 7 sind gegenüber dem Bohrloch 5 offen ausgebildet und weisen einen im wesentlichen halbkreisförmigen Querschnitt auf, wie dies insbesondere aus Fig. 3 hervorgeht. Die beiden Kanäle liegen in einer Ebene normal zur Längsachse der Öffnung 2.

Auf der dem Bohrloch 5 abgewandten Seite 9 weist die Öffnung 2 eine, zu derselben zentrisch angeordnete, konische Ausnehmung 11 auf.

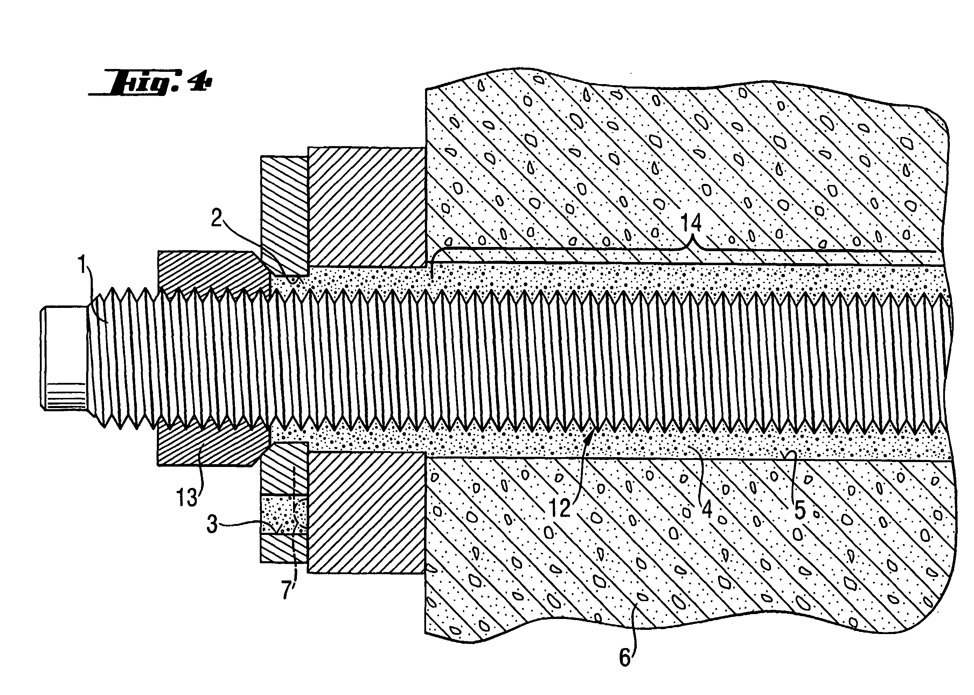

Insbesondere in Fig. 4 ist eine Anwendung der erfindungsgemässen Unterlegscheibe mit einem Injektionsanker 12 dargestellt. Der Injektionsanker 12 weist an seinem setzrichtungsseitigen Ende einen Festlegbereich 14 auf, um den Injektionsanker 12 im Untergrund 6 chemisch zu befestigen. Eine Mutter 13 dient zum Festspannen der Unterlegscheibe am injektionsanker 12. Dabei ist das setzrichtungsseitige Ende der Mutter 13 komplementär zur Ausnehmung 11 ausgebildet.

## Patentansprüche

1. Unterlegscheibe für eine, mittels einer Mörtelmasse in einem Bohrloch (5) befestigbare, Ankerstange (1), mit einer Öffnung (2) zur Durchführung der Ankerstange (1) und einer Durchgangsbohrung (3) zum Einfüllen der Mörtelmasse in das Bohrloch (5), **dadurch gekennzeichnet, dass** die Öffnung (2) und die Durchgangsbohrung (3) durch zumindest einen Kanal (7) miteinander verbunden sind, wobei der Verlauf des Kanals (7) von der Flucht, zwischen der Durchgangsbohrung (3) und der Öffnung (2) abweicht.

2. Unterlegscheibe nach Anspruch 1, **dadurch gekennzeichnet, dass** die Öffnung (2) und die Durchgangsbohrung (3) durch zumindest zwei Kanäle (7) miteinander verbunden sind.

3. Unterlegscheibe nach Anspruch 1 oder 2, **dadurch gekennzeichnet, dass** die Kanäle (7) entlang der Scheibenebene bogenförmig sind.

4. Unterlegscheibe nach einem der Ansprüche 1 bis 3, **dadurch gekennzeichnet, dass** die Kanäle (7) auf der dem Bohrloch (5) zugewandten Seite der Unterlegscheibe angeordnet und zumindest teilweise zu dieser Seite hin offen ausgebildet sind.

5. Unterlegscheibe nach einem der Ansprüche 1 bis 4, **dadurch gekennzeichnet, dass** die Summe der lichten Weite der Kanäle (7) etwa der lichten Weite der Durchgangsbohrung (3) entspricht.

6. Unterlegscheibe nach einem der Ansprüche 1 bis 5, **dadurch gekennzeichnet, dass** die dem Bohrloch (5) gegenüberliegende Seite (9) eine, zur Öffnung (2) zentrisch angeordnete, konische Ausnehmung (11) aufweist.

7. Verfahren zur Herstellung einer Unterlegscheibe nach einem der Ansprüche 1 bis 6, **dadurch gekennzeichnet, dass** zumindest die Kanäle (7) durch einen Prägevorgang hergestellt sind.

## Claims

1. Washer for an anchor bar (1), secured in a borehole (5) by means of a mortar substance and comprising an opening (2) for passing the anchor bar (1) through and a throughbore (3) for filling the mortar substance into the borehole (5), **characterised in that** the opening (2) and the throughbore (3) are linked by means of at least one channel (7), and the course of the channel (7) deviates from the alignment between the throughbore (3) and the opening (2).

2. Washer according to Claim 1, **characterised in that** the opening (2) and the throughbore (3) are linked by at least two channels (7).

3. Washer according to Claim 1 or 2, **characterised in that** the channels (7) are curved along the disc plane.

4. Washer according to one of Claims 1 to 3, **characterised in that** the channels (7) are arranged on the side of the washer oriented towards the borehole (5) and designed to be at least partially open towards this side.

5. Washer according to one of Claims 1 to 4, **characterised in that** the sum of the clear width of the channels (7) corresponds approximately with the clear width of the throughbore (3).

6. Washer according to one of Claims 1 to 5, **characterised in that** the side (9) opposite the borehole (5) comprises a conical cutout (11) arranged centrically relative to the opening (2).

7. Method for manufacturing a washer according to one of Claims 1 to 6, **characterised in that** at least the channels (7) are produced by a stamping process.

## Revendications

1. Rondelle pour une tige d'ancrage (1) à fixer dans un trou foré (5) au moyen d'une masse de mortier, comprenant un orifice (2) pour le passage de la tige d'ancrage (1) et un trou débouchant (3) pour l'introduction de la masse de mortier dans le trou foré (5), **caractérisée en ce que** l'orifice (2) et le trou débouchant (3) sont reliés entre eux par au moins un canal (7), le tracé du canal (7) s'écartant de l'alignement entre le trou débouchant (3) et l'orifice (2).

2. Rondelle selon la revendication 1, **caractérisée en ce que** l'orifice (2) et le trou débouchant (3) sont reliés entre eux par au moins deux canaux (7).

3. Rondelle selon la revendication 1 ou 2, **caractérisée en ce que** les canaux (7) sont arqués le long du plan de la rondelle.

4. Rondelle selon une des revendications 1 à 3, **caractérisée en ce que** les canaux (7) sont disposés sur le côté de la rondelle tourné vers le trou foré (5) et sont conçus au moins partiellement de façon ouverte vers ce côté.

5. Rondelle selon une des revendications 1 à 4, **caractérisée en ce que** la somme des ouvertures libres des canaux (7) correspond approximativement à l'ouverture libre du trou débouchant (3).

6. Rondelle selon une des revendications 1 à 5, **caractérisée en ce que** le côté (9) situé à l'opposé du trou foré (5) est pourvu d'un évidement conique (11) réalisé de manière centrée par rapport à l'orifice (2).

7. Procédé pour la fabrication d'une rondelle selon une des revendications 1 à 6, **caractérisé en ce qu'**au moins les canaux (7) sont fabriqués par une opération de matriçage.
